# EUROPÄISCHE PATENTSCHRIFT

(11) **EP 0 299 445 B1**
(45) Veröffentlichungstag und Bekanntmachung des Hinweises auf die Patenterteilung: **27.10.1993**
(21) Anmeldenummer: 88111184.3
(22) Anmeldetag: 13.07.1988
(51) Int. Cl.: G01N 21/47

(54) **Handmessgerät zur optischen Reflexionsmessung**
Manual instrument for reflection measurements
Instrument manuel pour des mesures de réflexion optique

(30) Priorität: 17.07.1987 DE 3723701
(43) Veröffentlichungstag der Anmeldung: 18.01.1989
(73) Patentinhaber: Krzyminski, Harald, Dr., D-61462 Königstein (DE)
(72) Erfinder: Krzyminski, Harald, Dr., D-61462 Königstein (DE)
(74) Vertreter: Wolf, Günter, Dipl.-Ing.

(56) Entgegenhaltungen:
- EP-A- 0 171 360
- EP-A- 0 204 547
- DE-A- 3 205 327
- DE-A- 3 247 355
- DE-A- 3 421 577
- US-A- 4 264 210
- APPLIED SPECTROSCOPY, Band 37, Nr. 2, 1983, Seiten 127-130; D.W. PAUL et al.: "Processor controlled multichannel microdensitometry for gas electron diffraction patterns"

## Beschreibung

Die Erfindung betrifft ein Handmeßgerät zur optischen Reflexionsmessung an farbigen Objekten gemäß Oberbegriff des Hauptanspruches.

Handmeßgeräte der genannten Art sind z.B. nach der EP-A- 0 171 360 und nach der DE-A-34 21 577 bekannt. Derartige Geräte haben als Farbauflichtdensitometer für Reflexionsmessungen an Druckkontrollstreifen in der Druckindustrie breite Anwendung gefunden. Die Bedeutung dieser Meßtechnik und der dafür eingesetzten Geräte hat unter anderem ihren Ausdruck in DIN 16 536 gefunden, die detaillierte Empfehlungen gibt über die richtige Anwendung der Farbdensitometrie und über die technische Ausführung der Meßgeräte hinsichtlich ihrer Meßgeometrie, Filter, Beleuchtung und anderer technischer Einzelheiten.

Moderne Farbdensitometer sind heute fast ausnahmslos leicht bedienbare Handmeßgeräte. Nur in wenigen Fällen werden noch Densitometer angeboten, die aus zwei Teilen bestehen, nämlich der Meßeinrichtung und einem Gehäuse mit der Steuer- und Auswerteelektronik. Unabhängig von diesem und anderen Unterschieden in der Bauart haben alle bisher bekanntgewordenen Farbauflichtdensitometer die Eigenschaft, daß sie punktweise messen. Mit einem Sucher, der in der Regel eine kreisförmige Öffnung von der Größe des Meßpunkts besitzt, wird zunächst die Meßstelle anvisiert. Dann wird der die eigentliche Meßeinheit tragende Geräteteil abgesenkt, bis die Öffnung der Meßeinheit über der Öffnung des Suchers steht. Erst dann wird der eigentliche Meßvorgang ausgelöst. Am Ende steht dabei immer das an einem einzigen Punkt gewonnene Meßergebnis, wobei die Punktgröße in der Regel einen Durchmesser zwischen 3 und 4 mm hat.

Für die Ermittlung der qualitätsbestimmenden Kenngrößen an einem Druckbogen sind an dem Druckkontrollstreifen zahlreiche Messungen auszuführen.

Die Meßfelder eines Druckkontrollstreifens haben in der Regel eine Breite von 6 mm. Das bedeutet, daß der Druckkontrollstreifen eines Druckbogens von einem Meter Breite 166 Meßfelder besitzt. Es ist verständlich, daß diese vielen Meßfelder unmöglich alle mit einem punktweise arbeitenden Gerät vorbekannter Art gemessen werden können. Dies führt dazu, daß man sich bereits bei der Erstellung des Probeandrucks und erst recht später beim Einrichten der Druckmaschine, was immer ein Wettlauf gegen Zeit und Makulatur ist, auf stichprobenweise Messungen an kritischen Bildstellen beschränken muß.

Es hat deshalb nicht an Versuchen gefehlt, die Farbauflichtdensitometer schneller zu machen. Vor allem hat man sich bemüht, das Absenken der Meßeinheit über dem Sucher zu beschleunigen.

Bei einigen Densitometern ist die den Sucher tragende Grundplatte über ein einfaches Scharnier mit dem Geräteteil verbunden, der die Meßeinheit trägt. Dieser durch Federkraft oben gehaltene Geräteteil wird zur Ausführung der Messung mit der Hand nach unten gedrückt. An anderen Densitometern wird der die Meßeinheit tragende Geräteteil - ebenfalls von Hand - nach dem bekannten kinematischen Prinzip der Parallelschwinge über dem Sucher abgesenkt. Schließlich gibt es Densitometer, deren Meßeinheit durch einen elektromotorischen Antrieb in Position über den Sucher gebracht wird. Weiterhin hat man versucht, das meistens manuell bewegte Filterrad motorisch anzutreiben bzw. durch mehrere mit Filtern bestückte Photoelemente gänzlich zu ersetzen, um dadurch die Handhabung zu vereinfachen und zu beschleunigen (Siehe DE-A- 34 21 577). Dazu muß angemerkt werden, daß der Reflexionsgrad der Druckfarben mit Hilfe von komplementären Farbfiltern gemessen wird.

Alle diese Maßnahmen konnten aber den entscheidenden Mangel der Farbauflichtdensitometer nicht beheben, daß nämlich bei einem Meßvorgang immer nur ein Meßpunkt bzw. ein einziges Meßfeld unter den vielen eines Druckkontrollstreifens erfaßt wird.

Der Erfindung liegt demgemäß die Aufgabe zugrunde, Handmeßgeräte der eingangs genannten Art dahingehend zu verbessern, daß die Handhabungs- und Funktionsschnelligkeit dieser Geräte ohne Beeinträchtigung ihrer schon jetzt vorhandenen Vorteile spürbar beschleunigt wird.

Diese Aufgabe ist mit einem Handmeßgerät der eingangs genannten Art nach der Erfindung durch die im Kennzeichen des Hauptanspruches angeführten Merkmale gelöst. Vorteilhafte Weiterbildungen und praktische Ausführungsformen ergeben sich nach den Unteransprüchen.

Nach der vorerwähnten EP-A- 0171360 ist zwar ein Handdensitometer mit einer Verstellmechanik für den am Gerätegehäuse verstellbar angeordneten Meßkopf vorgesehen, die Verstellbarkeit des Meßkopfes dient hierbei aber nur dazu, den Meßkopf einerseits zurückfahren zu können, um dadurch zwecks lagegenauer Positionierung des Gerätes eine Meßblende freizustellen und um andererseits den Meßkopf zwecks Messung wieder über die lagegenau angeordnete Meßblende zu fahren, was mit dem schnellen Abfahren bzw. Abtasten einer Meßstrecke nichts zu tun hat.

Da die Meßeinheit des Handdensitometers erfindungsgemäß im Gerät beweglich angeordnet ist, kann sie durch einen geeigneten elektromotorischen Antrieb eine größere Meßstrecke überstreichen, wobei die Meßstrecke in eine angemessene, den jeweiligen Erfordernissen entsprechende Anzahl von aneinandergereihten Meßpunkten aufgelöst wird. Der Abstand der Meßeinheit zur Oberfläche der zu messenden Probe bleibt dabei unverändert. Die Reflexionswerte der einzelnen Meßpunkte werden einem geräteinternen Mikrocomputer zur Auswertung zugeführt und nach ihrer kenngrößengerechten Auswertung auf einem ebenfalls geräteinternen, vorzugsweise alphanumerischen Display zur Anzeige gebracht. Teil des erfindungsgemäßen Meßgerätes ist auch die Sucheinrichtung, die es erlaubt, die gewünschte Meßstrecke schnell anzuvisieren, das Gerät aufzusetzen und für den darauffolgenden Abtastvorgang durch die Meßeinheit Anfang und Ende der Meßstrecke sowie ihren Verlauf eindeutig festzulegen.

Dabei sind für die Handhabung und die Funktion des erfindungsgemäßen Gerätes folgende Einzelheiten von Bedeutung:
Zunächst ist zu bevorzugen, daß die Bewegung der Meßeinheit im Bereich der Meßstrecke entlang einer Geraden verläuft. Jede andere Führung, z.B. auch die entlang eines Kreisbogens, würde die örtliche Festlegung der Meßstrecke und die Zuordnung der einzelnen Meßpunkte zum jeweiligen Streckenabschnitt erschweren. Eine geradlinige Bewegung ist dadurch zu verwirklichen, daß der Verstellantrieb der Meßeinrichtung in Form eines mit einem kleinen schritt- oder winkelkodierten E-Motor gekoppelten Dreh-Linear-Bewegungsumsetzungsgetriebes ausgebildet ist.

Weiterhin ist es notwendig, die Meßstrecke auf eine angemessene Länge zu beschränken; einmal, weil dies die relativ kleinen Abmessungen eines Handmeßgerätes verlangen, zum anderen, um ein Optimum zwischen der Menge der erfaßbaren Meßdaten und der gewünschten Schnelligkeit und Flexibilität zu erreichen. Eine vernünftige Länge der Meßstrecke liegt, wie sich gezeigt hat, vorzugsweise bei 50 mm. Das genügt, um wenigstens acht Meßfelder eines Druckkontrollstreifens in einer Reihe zu erfassen und damit bei einem Vierfarbendruck pro Druckfarbe zwei Meßfelder auszuwerten. Eine Länge im Bereich von 50 mm ist auch deshalb zu bevorzugen, weil die Breite der sogenannten Farbzonen, nach denen die Farbführung an Offsetdruckmaschinen eingestellt wird, zwischen 30 und 40 mm liegt und damit von der bevorzugten Meßlänge von 50 mm abgedeckt wird. Weiterhin sollte es möglich sein, mit einem Handdensitometer der erfindungsgemäßen Art Druckkontrollstreifen an Druckbogen der gängigen Größe DIN A4 im Querformat durch einen einzigen Meßvorgang auszuwerten. Dafür ist eine Meßstrecke von 300 mm Länge erforderlich. Berücksichtigt man außerdem die besonderen Anforderungen bei der Messung farbmetrischer Kennwerte, dann sind Meßstrecken erwünscht, deren Länge bis 12 mm herabreicht.

Wichtig ist außerdem, daß die Meßstrecke in möglichst viele aneinandergereihte Meßpunkte aufgelöst und die gewünschte Auflösung am Gerät vorher eingestellt werden kann. Im Falle von Druckkontrollstreifen mit 6 mm breiten Meßfeldern beträgt die Auflösung ebenfalls 6 mm. Es gibt aber Anwendungsfälle, in denen eine engere örtliche Folge der Meßpunkte erwünscht ist. Bei der meßtechnischen Kontrolle von glatten Farbtönen zum Beispiel erhält man eine bessere Aussage über die Gleichmäßigkeit des Drucks, wenn in engen Abständen der Farbreflexionswert gemessen wird. Das gleiche gilt, wenn Texturen oder Strukturen des Bedruckstoffes auf die Gleichmäßigkeit der Farbannahme untersucht werden sollen. Hier sind Abstände erwünscht, die eine nahezu kontinuierliche Meßwertaufnahme gewährleisten.

Solche Prüfungen sind mit den vorbekannten punktweisen Meßverfahren überhaupt nicht durchführbar. Das bedeutet, daß die erfindungsgemäße Lösung nicht allein ein schnelleres Messen, sondern auch völlig neue, erweiterte Meßverfahren ermöglicht.

Ein weiteres Beispeil für neue Meßmöglichkeiten nach dem erfindungsgemäßen Prinzip ist, daß die Veränderungen, d.h. der örtliche Gradient der Farbreflexion bestimmt werden kann. Solche Messungen sind erwünscht, wenn bestimmte Farb- oder Helligkeitsverläufe in Bildvorlagen oder in gedruckten oder sonstwie reproduzierten Bildern geprüft oder eingestellt werden sollen. Auch hier versagt das bisher praktizierte punktweise Messen, während vorteilhaft die erfindungsgemäße Meßdatenerfassung mehrerer Meßstellen in kleinen Abständen entlang einer Meßstrecke das angestrebte Ergebnis ermöglicht, und zwar unter Beibehaltung des Gerätes in seiner einmal aufgesetzten Stellung für einen bestimmten Bereich der Meßstrecke.

Im Bereich der Chemie, der Medizin und Biotechnik stellen sich häufig ähnliche Anforderungen bei der Auswertung von farbigen Indikatoren und Präparaten. Auch hier erschließen Handdensitometer oder Handreflexionsmeßgeräte, die nach dem genormten Dreibereichsverfahren farbmetrische Kennwerte ermitteln, neue Meßmethoden, sofern sie nach dem erfindungsgemäßen Prinzip arbeiten.

Die Auflösung einer Meßstrecke in einzelne aneinandergereihte Meßpunkte macht es notwendig, daß Anfang und Ende der Meßstrecke und die Ortskoordinate jedes Meßpunkts exakt bestimmt sind. Es ist daher Teil der Erfindung, daß die Meßeinheit durch einen Schrittmotor angetrieben wird oder durch einen Elektromotor, dessen Ankerstellung durch einen Winkelkodierer kontrolliert wird. Beide Antriebsarten sind über einen geräteinternen Mikrocomputer steuerbar, so daß jedem aufgenommenen Meßwert die richtige Ortskoordinate zugeordnet werden kann. Mit Hilfe des Mikrocomputers kann damit die Anzahl der Messungen pro Meßstrecke, d.h. ihre Auflösung festgelegt werden, wenn nur bestimmte Stellen entlang der Meßstrecke von Interesse sind. Im Extremfall kann die Auswahl auf die Messung einer einzigen bestimmten Stelle der Meßstrecke reduziert werden, wodurch das erfindungsgemäße Handmeßgerät durchaus auch im Sinne der herkömmlichen punktweise messenden Geräte genutzt werden kann.

Zur erfindungsgemäß beweglichen Meßeinheit selbst ist auszuführen, daß diese ohne weiteres unterschiedliche Ausführungsformen zuläßt. Die herkömmliche Konstruktion einer Meßeinheit mit nur einer Lichtquelle und einem Photoelement sowie einem zwischen Lichtquelle und Photoelement angebrachten Filterrad ist zwar grundsätzlich möglich, führt aber in Verbindung mit dem hier notwendigen Antriebssystem der Meßeinheit zu einem insgesamt sehr komplizierten System. Eine manuelle Betätigung des Filterrads, wie sie heute noch an punktweise messenden Densitometern üblich ist, scheidet bei der erfindungsgemäßen Bauart aber grundsätzlich aus, denn für jede zu messende Farbe wäre dann ein besonderer Meßvorgang über die gesamte Meßstrecke hinweg notwendig und zwischen jedem Meßvorgang müßte das Filterrad erneut verstellt werden. Das aber widerspräche der gestellten Aufgabe nach einer deutlichen Beschleunigung und Vereinfachung der Handhabung.

Dagegen sind bevorzugt Meßeinheiten mit einer Lichtquelle und mehreren filterbestückten Photoelementen - etwa entsprechend DE-A- 34 21 577 - ohne Komplikationen im erfindungsgemäßen Gerät integrierbar. Das gleiche gilt für Meßeinheiten, wie sie zur Durchführung des farbmetrischen Dreibereichsverfahrens eingesetzt werden. Solche Meßeinheiten benötigen neben einer Lichtquelle drei Photoelemente, wobei die Photoelemente mit Farbfiltern bestückt sind, die der Farbempfindlichkeit des sogenannten Normalbeobachters entsprechen.

Für die erfindungsgemäß vorgesehene Meßstreckensucheinrichtung ist wesentlich, daß neben einer eindeutigen Begrenzung von Anfang und Ende der Meßstrecke, die Meßstrecke für den Benutzer des Gerätes sichtbar unterteilt ist. Das wird auf einfache Weise damit erreicht, daß neben der Meßstrecke ein Maßstab angebracht ist, dessen Teilung erkennen läßt, welche Auflösung der Meßstrecke der jeweiligen Aufgabe am besten entspricht. Natürlich kann der Maßstab auch mit mehreren Teilungen versehen sein, z.B. einer Millimeterteilung und einer Teilung von 6 mm-Schritten für die Auswertung von Druckkontrollstreifen. Schließlich können auch auswechselbare, mit verschiedenen Teilungen versehene Maßstäbe vorgesehen werden.

Eine besondere Ausführung der Meßstreckensucheinrichtung als Teil der erfindungsgemäßen Lösung besteht darin, daß zwischen den Begrenzungen von Anfang und Ende der Meßstrecke entlang der Meßstrecke ein Lichtband auf die Meßvorlage projiziert wird. Die Markierung durch einen farbigen, z.B. roten oder grünen Lichtstrahl, hat den Vorteil, daß die Position der Meßstrecke auf der Meßvorlage besonders deutlich angezeigt werden kann. Das ist unter anderem hilfreich bei der Auswertung schmaler Druckkontrollstreifen, bei denen es darauf ankommt, die Meßstrecke möglichst genau auf Längsmitte des Druckkontrollstreifens zu legen. Außer der Länge und Position der Meßstrecke kann mit der Anordnung eines Lichtbandprojektors auch die Breite der Meßstrecke sichtbar gemacht werden, wenn vorteilhaft die Breite des projizierten Lichtbandes dem Durchmesser des Meßpunktes entspricht. Ein derartiges Lichtband ist mit einfachen Mitteln durch eine beleuchtete Schlitzblende herstellbar, die mit einem Objektiv auf die Meßstrecke projiziert wird. Andere äquivalente Lösungen können darin bestehen, daß ein fokusierter Lichtstrahl entlang der Meßstrecke über einen kleinen rotierenden Spiegel oder ein einfaches Spiegelgalvanometer ausgelenkt wird.

Um die Handhabung der erfindungsgemäßen Meßgeräts zusätzlich zu erleichtern, wird außerdem eine Ausführungsform vorgeschlagen, bei der Meßeinheit und Meßstreckensucheinrichtung im Gehäuse des Meßgeräts drehbar und feststellbar angeordnet sind. Damit kann die Lage von Mebeinheit und Meßstreckensucheinrichtung zu äußeren Gestalt des Geräts verändert werden, mit dem Ergebnis, daß beim Ausmessen eines Druckkontrollstreifens das Meßgerät nicht ausschließlich parallel zum Druckkontrollstreifen geführt werden muß. Vielmehr kann bei entsprechend eingestellter Lage von Meßeinheit und Meßstreckensucheinrichtung das Gerät in einem mehr oder weniger schrägen Winkel zum Druckkontrollstreifen geführt werden, was einer bequemen Handhabung entgegenkommt. Bei einer Verlagerung von Meßeinheit und Meßstreckensucheinrichtung um 180° von der Frontseite des Geräts auf die abgekehrte Geräteseite, nehmen Meßeinheit und Sucher eine Position ein, die für Linkshänder zur Handhabung besonders günstig ist. In diesem Fall wird man zweckmäßigerweise dafür sorgen, daß die Ziffern und Buchstaben in der Anzeige umgekehrt werden, wofür geeignete elektronische Schaltungen bekannt sind.

Das erfindungsgemäße Handmeßgerät wird nachfolgend anhand der zeichnerischen Darstellung von Ausführungsbeispielen näher erläutert.

Es zeigt schematisch
- Fig. 1,2: perspektivisch das Handmeßgerät in Form eines quaderförmigen Gehäuses mit Meßeinheit und Meßstreckensucheinrichtung;
- Fig. 3: einen Teilschnitt durch das Gerät im Bereich der verfahrbaren Meßeinheit;
- Fig. 4: eine Draufsicht auf eine Ausführungsform des Verstellantriebes für die Meßeinheit und
- Fig. 5,6: perspektivisch das Handmeßgerät in besonderer Ausführungsform mit einem dreh- bzw. schwenkbaren Gehäuseteil.

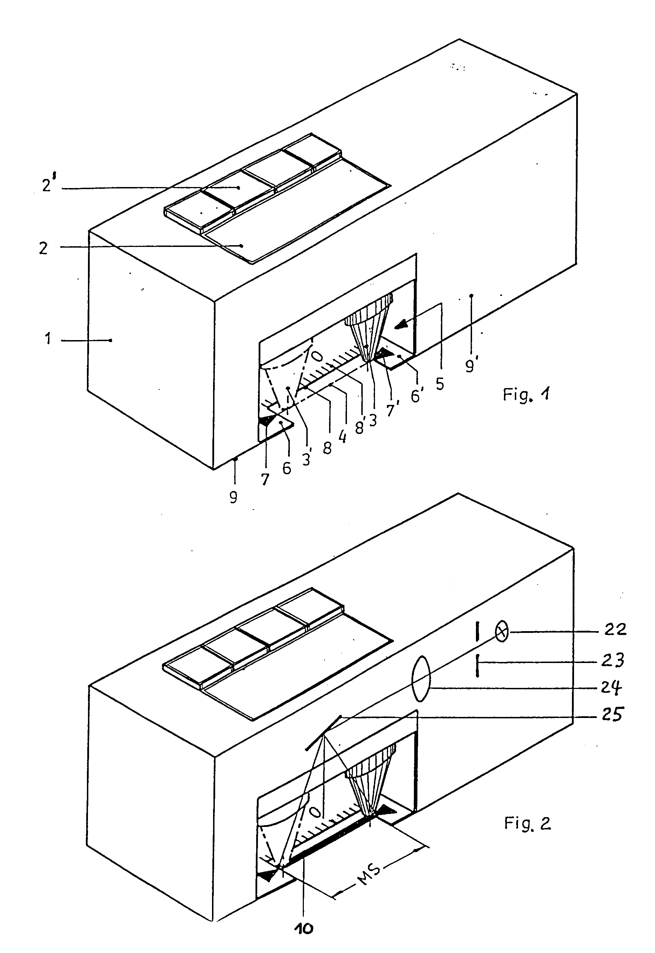

Fig. 1 zeigt in einer Gesamtdarstellung die wesentlichen Elemente, wobei das Gehäuse 1, das Anzeigenfeld 2 und die Tastatur 2' bekannte Elemente sind. Für das Anvisieren der Meßstrecke und für die Meßwertaufnahme besitzt das Gerät eine seitliche, dem Benutzer zugewandte Nische 5, die das Meßstreckensuchsystem 4 und die Meßeinheit 3 bzw. 3' enthält. Die Begrenzungen 6 und 6' zeigen dem Benutzer Anfang und Ende der Meßstrecke MS an. Die beiden Pfeile 7 und 7' auf den Begrenzungen verdeutlichen den Verlauf der Mittellinie der Meßstrecke MS , die von der Meßeinheit 3 bzw. 3' bei der Meßwertaufnahme überstrichen wird. Der Verlauf der Meßstrecke wird für den Benutzer außerdem durch eine seitliche Begrenzung 8 verdeutlicht, wobei die Begrenzung 8 eine geeignete Teilung 8′ trägt, damit der Benutzer die bestmögliche Voreinstellung der Meßpunktabstände vornehmen kann. Zur Meßwertaufnahme kann die Meßeinheit 3 die Meßstrecke MS in beiden Richtungen abtasten.

Fig. 2 zeigt noch einmal die Gesamtansicht des Geräts, jedoch mit der Besonderheit, daß jetzt Verlauf und Breite der Meßstrecke MS durch ein Lichtband 10 angezeigt werden. Hierdurch wird das exakte Anvisieren der Meßstrecke erleichtert. Das Lichtband wird von oben auf die Meßstrecke projiziert. Es kann z.B. durch die Projektion einer beleuchteten Schlitzblende oder durch einen scharfen Lichtstrahl erzeugt werden, der durch einen rotierenden oder schwingenden Spiegel ausgelenkt wird. Im Ausführungsbeispiel wird der Lichtstrahl der Lampe 22 durch die Irisblende 23 auf die gewünschte Größe gebracht und durch das Objektiv 24 auf die Meßstrecke MS projiziert. Das Spiegelgalvanometer 25 bewerkstelligt die Auslenkung des Lichtstrahls über die Länge der Meßstrecke MS. Die mechanischen Begrenzungen des Suchersystems werden zweckmäßigerweise beibehalten und erleichtern gemeinsam mit dem Lichtband das Anvisieren und Festlegen der Meßstrecke.

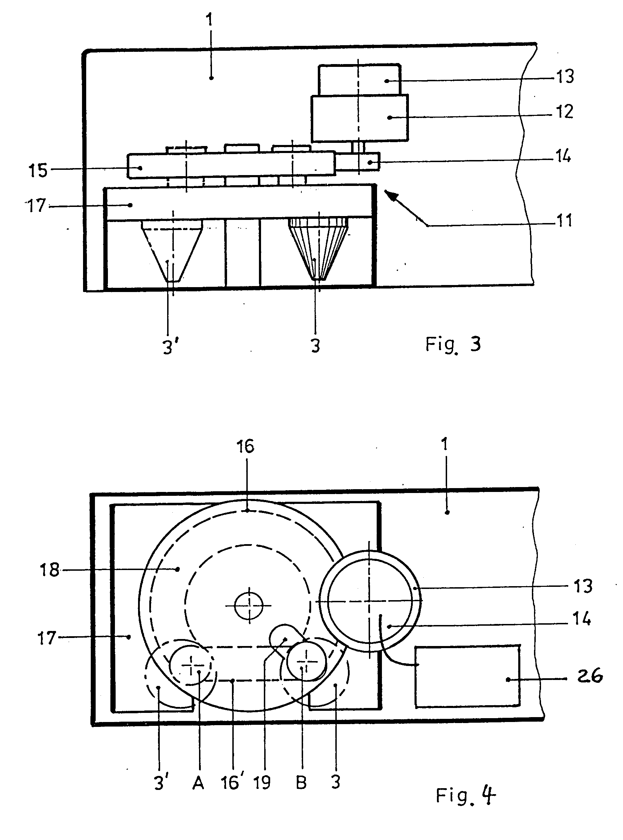

Die Fig. 3 und 4 zeigen die Ausführungsform eines Verstellantriebes 11 für die Meßeinheit 3 bzw. 3′. Der Elektromotor 12 mit dem Winkelkodierer 13 treibt über ein Ritzel 14 eine außen verzahnte Antriebsscheibe 15 an, die die Meßeinheit 3 bzw. 3′ mit sich führt. Damit im Bereich der Meßstrecke MS die Meßeinheit von ihrer Kreisbahn 16 in eine gerade Bahn 16′ gezwungen wird, ist eine Führungsscheibe 17 mit einer entsprechenden Kontur 18 vorhanden. Damit die Meßeinheit der Kontur 18 der Führungsscheibe 17 folgen kann, ist die Meßeinheit 3 in einer radialen Nut 19 der Antriebsscheibe 15 verschiebbar gelagert.

Die gewählte Ausführungsform des Antriebssystems erlaubt zwei Bewegungsarten. Einmal kann der Elektromotor 12 mit dem Winkelkodierer 13 vom geräteinternen Mikrocomputer derart gesteuert werden, daß die Meßeinheit 3 nur zwischen den Endpunkten A und B hin und her bewegt wird. Zweitens aber kann die Meßeinheit 3 für jeden Meßvorgang eine vollständige Kreisbewegung ausführen und mit dieser Kreisbewegung zu einem bestimmten Ausgangspunkt zurückkehren. Im Falle einer Kreisbewegung gegen den Uhrzeigersinn kommt dafür der Punkt A in Betracht, bei einer Kreisbewegung im Uhrzeigersinn der Punkt B. Die Bewegung der Meßeinheit 3 in gerader Linie über die Meßstrecke MS bleibt von einer solchen Kreisbewegung zur Rückführung der Meßeinheit 3 in die Ausgangsstellung unberührt.

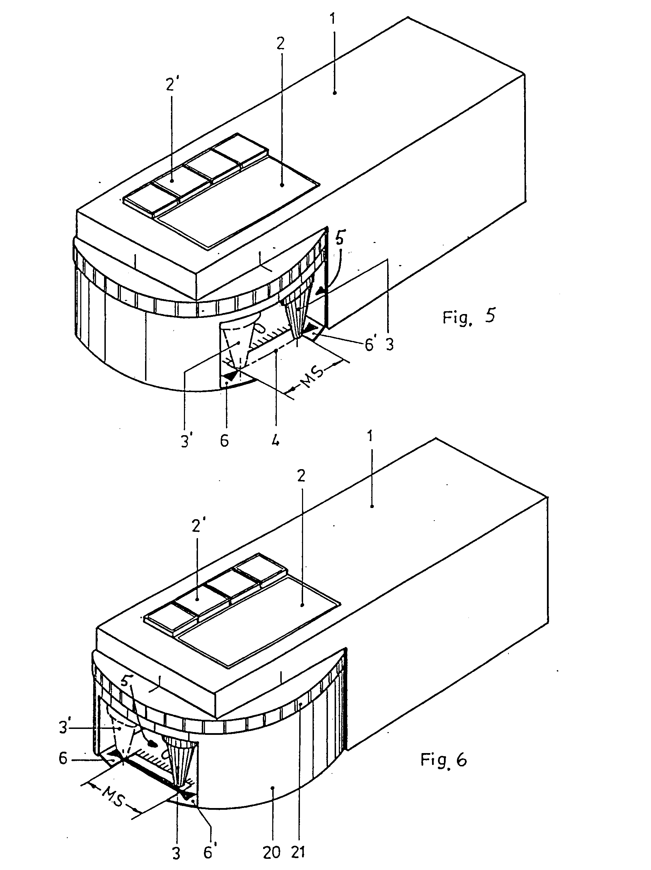

Fig. 5 und 6 zeigen eine Ausführungsform, bei der die Meßeinheit 3 bzw. 3' und die Meßstreckensucheinrichtung 4 im Gehäuse 1 des Geräts drehbar angeordnet sind. Um das zu erreichen, sind die Meßeinheit 3 bzw. 3' und die Meßstreckensucheinrichtung 4 in einem dreh- bzw. schwenkbaren Gehäuseteil 20 gelagert, der einen mit einer Verzahnung versehenen Rastring 21 aufweist, der das Gehäuseteil 20 in der vorgesehenen Position hält. Bei der gewählten Ausführungsform können die Meßeinheit 3 bzw. 3' samt Sucher 4 in kleinen Schritten um 180° von der Frontseite des Geräts bis zur Geräterückseite bewegt werden. In Fig. 6 ist eine Verstellung des Gehäuseteils 20 um 90° zur Stirnseite des Gehäuses 1 dargestellt.

## Patentansprüche

1. Handmeßgerät zur optischen Reflexionsmessung an farbigen Objekten bestehend aus einem Gehäuse (1) mit Meßwertanzeige (2) und Meßeinrichtung, dadurch gekennzeichnet, daß die Meßeinheit (3) am oder im mit einer Meßstreckensucheinrichtung (4) versehenen Gehäuse (1) längs einer Meßstrecke (MS) in gerader Richtung verschieblich gelagert und mit einem im Gehäuse (1) angeordneten Verstellantrieb (11) gekoppelt ist und daß die Sucheinrichtung (4) in Form eines die Länge der Meßstrecke (MS) definierenden Blenden-Längsausschnittes (6, 6′) unter dem Verstellweg der Meßeinheit (3) in Richtung des Verstellweges am Gehäuse (1) sichtzugänglich angeordnet ist.

2. Meßgerät nach Anspruch 1, dadurch gekennzeichnet, daß in Gehäuse (1) eine seitlich und gegen eine Aufsatzfläche (9) des Gehäuses mindestens teilweise offene, die verschiebliche Meßeinheit (3) aufnehmende Nische (5) angeordnet ist.

3. Meßgerät nach Anspruch 1 oder 2, dadurch gekennzeichnet, daß der Verstellantrieb (11) der Meßeinheit (3) in Form eines mit einem schritt- oder winkelkodierten E-Motor (12) gekoppelten Dreh-Linear-Bewegungsumsetzungsgetriebes (17) ausgebildet ist.

4. Meßgerät nach Anspruch 3, dadurch gekennzeichnet, daß der Ort jeder einzelnen, von der Meßeinheit (3) abtastbaren Meßstelle auf der Meßstrecke durch die Winkelstellung des Schrittmotors oder die Stellung des Winkelkodierers des E-Motors bestimmbar und von einem geräteinternen Mikrocomputer (26) kontrollierbar ist.

5. Meßgerät nach einem der Ansprüche 1 bis 4, dadurch gekennzeichnet, daß der Ausschnitt (6, 6′) der Sucheinrichtung an seinem Längsrand (8) mit einer Teilungsmarkierung (8′) versehen ist.

6. Meßgerät nach einem der Ansprüche 1 bis 5, dadurch gekennzeichnet, daß im oder am Gehäuse (1) ein mindestens die Länge der Meßstrecke unter dem Bewegungsbereich der Meßeinheit (3) markierender Lichtbandprojektor angeordnet ist.

7. Meßgerät nach einem der Ansprüche 1 bis 6, dadurch gekennzeichnet, daß die Abstände der Meßstellen voneinander auf der Meßstrecke vorwählbar und während des Meßvorgangs durch den geräteinternen Mikrocomputer (26) kontrollierbar sind.

8. Meßgerät nach einem der Ansprüche 1 bis 7, dadurch gekennzeichnet, daß die bewegliche Meßeinheit (3) und die Meßstreckensucheinrichtung (4) in einem zum Gehäuse (1) dreh- oder schwenkbaren Gehäuseteil (20) angeordnet sind.

## Claims

1. A hand meter for the optical reflection measurement on coloured items, comprising a casing (1) provided with a measured value display (2) and a measuring system, characterized in that the metering unit (3) is disposed on or in a casing (1) provided with a measured distance locator (4) in a manner displaceable along a measured distance (MS) in the straight-line direction and is coupled to an adjusting drive (11) disposed in the casing (1), and that the locator (4) in the form of a longitudinal aperture cut (6,6') defining the length of the measured distance (MS) of the aperture is visibly disposed on casing (1) underneath the path of displacement of the metering unit (3) in the direction of the path of displacement.

2. A meter according to claim 1, characterized in that a recess (5) is provided in the casing (1) with the recess being at least partly open laterally of and vis-à-vis a mounting surface (9) of the casing and accommodating the displaceable metering unit (3).

3. A meter according to claims 1 or 2, characterized in that the adjusting drive (11) of the metering unit (3) is configured in the form of a rotary/linear motion converter (17) coupled to a stepping or angular-encloded electromotor (12).

4. A meter according to claim 3, characterized in that the place of each individual point of measurement on the measured distance scanned by the metering unit (3) is determinable by the angular position of the stepping motor or the position of the angular encoder of the electromotor and is controllable by a microcomputer (26) integrated into the device.

5. A meter according to any one of claims 1 to 4, characterized in that the cut (6,6') of the locator on the longtudinal edge (8) thereof is provided with a graduation (8').

6. A meter according to any of claims 1 to 5, characterized in that a light band projector marking at least the length of the measured distance is located in or on the casing (1) underneath the range of movement of the metering unit (3).

7. A meter according to any one of claims 1 to 6, characterized in that the spaces between the points of measurement on the measured distance are predeterminable and are controllable during the metering process by the microcomputer (26) integrated into the device.

8. A meter according to any one of claims 1 to 7, characterized in that the movable metering unit (3) and the measured distance locator (4) are disposed in a casing section (20) rotatable or swivable relative to casing (1).

## Revendications

1. Appareil de mesure portatif pour la mesure de la réflexion optique sur des objets de couleur, constitué par un boîtier (1) avec un affichage des valeurs mesurées (2) et un dispositif de mesure, **caractérisé en ce** que l'unité de mesure (3) est placée en étant mobile sur ou dans le boîtier (1) équipé d'un dispositif de visée de distance mesurée (4) le long d'une distance mesurée (MS) dans le sens droit et couplée à un entraînement de réglage (11) placé dans le boîtier (1) et que le dispositif de visée (4) est placé en forme d'une découpure longitudinale de diaphragme (6, 6') qui définit la longueur de la distance mesurée (MS) sous le parcours de réglage de l'unité de mesure (3) dans le sens du parcours de réglage sur le boîtier (1) en étant accessible à la vue.

2. Appareil de mesure selon la revendication 1, **caractérisé en ce** qu'une niche (5), qui est au moins partiellement ouverte latéralement et contre une surface de pose (9) de l'appareil et qui loge l'unité de mesure mobile (3), est ménagée dans le boîtier (1).

3. Appareil de mesure selon la revendication 1 ou 2, **caractérisé en ce** que l'entraînement de réglage (11) de l'unité de mesure (3) est configuré en forme d'engrenage de transfert de mouvement rotatif-linéaire (17) couplé à un moteur électrique pas à pas ou avec codage d'angle (12).

4. Appareil de mesure selon la revendication 3, **caractérisé en ce** que le lieu de chaque endroit de mesure individuel, qui peut être balayé par l'unité de mesure (3), peut être déterminé sur la distance mesurée par la position angulaire du moteur pas à pas ou par la position du codeur d'angle du moteur électrique et qu'il peut être contrôlé par un micro-ordinateur interne à l'appareil (26).

5. Appareil de mesure selon l'une des revendication 1 à 4, **caractérisé en ce** que la découpure (6, 6') du dispositif de visée est équipée, sur son bord longitudinal (8), d'un marquage de divisions (8').

6. Appareil de mesure selon l'une des revendications 1 à 5, **caractérisé en ce** qu'un projecteur de bande lumineuse, qui marque au moins la longueur de la distance mesurée sous la zone de mouvement de l'unité de mesure, est placé dans ou sur le boîtier (1).

7. Appareil de mesure selon l'une des revendications 1 à 6, **caractérisé en ce** que les écarts entre les endroits de mesure les uns par rapport aux autres peuvent être présélectionnés sur la distance mesurée et peuvent être contrôlés pendant le processus de mesure par un micro-ordinateur interne à l'appareil (26).

8. Appareil de mesure selon l'une des revendications 1 à 7, **caractérisé en ce** que l'unité de mesure mobile (3) et le dispositif de visée de distance mesurée (4) sont placés dans une partie de boîtier (20) qui est rotative ou pivotante par rapport au boîtier (1).
